# EUROPEAN PATENT APPLICATION

(11) **EP 3 943 648 A1**
(43) Date of publication of application: **26.01.2022**
(21) Application number: 20305835.9
(22) Date of filing: 21.07.2020
(51) Int. Cl.: D01F 8/12, D01F 8/06, D01F 8/18, A01D 34/416

(54) **MONOFILAMENT FOR CUTTING VEGETATION**

(71) Applicant: Speed France S.A.S., 69400 Arnas (FR)
(72) Inventor: BELJEAN, Yann, 69400 ARNAS (FR)
(74) Representative: Regimbeau

(57) **Abstract**

The invention relates to a monofilament for cutting vegetation, comprising:
- a matrix (1) made of a first polyamide material and
- at least two channels (2, 2a-2d) separately embedded in the matrix (1), the at least two channels being made of a polyolefin material or a second polyamide material different from the first polyamide material.

## Description

### FIELD OF THE INVENTION

The present invention relates to a monofilament for use in a vegetation cutting machine, and a process for manufacturing such a monofilament.

### BACKGROUND OF THE INVENTION

Monofilaments used for cutting vegetation are usually made of polyamide since this material is resistant to abrasion and heat.

Originally, monofilaments were made of a single material, which could comprise one polyamide or a mixture of at least two polyamides.

Then, coextruded monofilaments have been developed, comprising a core and a sheath surrounding the core, the core and the sheath being made of different materials. Said structure of the monofilaments was intended to solve specific technical problems. For example, the sheath could be made of a more flexible material than the sheath to improve impact behavior by increasing absorption of impact energy. In other situations, the sheath could be made of a material having an increased resistance to abrasion, to temperature, etc. In other situations, the materials of the core and the sheath could result from an economic compromise, in order to use a technical, expensive material only in required regions of the monofilament.

However, this structure of the monofilament usually allows optimizing one aspect of the monofilament, whereas the design of a monofilament has to deal with a plurality of technical constraints: impact resistance, heat resistance, reduced fibrillation, adaptation to various climatic conditions, adaptation to various types of vegetation, etc., which may be solved by different or even antagonist solutions

### SUMMARY OF THE INVENTION

Thus, there is a need for monofilaments for cutting vegetation having an improved structure allowing to optimizing several properties of the monofilament.

To that end, the invention provides a monofilament for cutting vegetation, comprising:
- a matrix made of a first polyamide material and
- at least two channels separately embedded in the matrix, the at least two channels being made of a polyolefin material or a second polyamide material different from the first polyamide material.

In some embodiments preferred but optional embodiments, which may be combined if appropriate:
- the matrix extends over the whole circumference of the monofilament;
- the matrix and the at least two channels extend continuously along a longitudinal axis of the monofilament;
- the at least two channels are linear and parallel to the longitudinal axis;
- the at least two channels are arranged according to a regular pattern over the cross section of the monofilament;
- the at least two channels present a triangular cross section, an altitude of each triangle being oriented radially between a base and a vertex of the triangle and said base being located more inside the monofilament than said vertex;
- the volume of the channels is comprised between 10% and 80% of the volume of the monofilament;
- the first and/or second material comprises at least one of: polyamide 6, polyamide 6-6, copolyamide 6/66, polyamide 4-6, polyamide 6-10, polyamide 11, polyamide 12, polyamide 6T and polyamide 6/6T;
- the first and/or second material comprises a filler made of at least one of: natural fibers, such as flax, hemp, cellulose, or miscanthus, talc, silica, alumina (Al₂O₃), and titanium oxide (TiO₂);
- the weight of the channels is comprised between 20 and 80% of the weight of the monofilament;
- the monofilament is obtained by a single extrusion step;
- the first and second materials are coextruded;
- the monofilament presents a diameter comprised between 1.6 mm and 4.5 mm.

Another object relates to a manufacturing process for manufacturing the monofilament described above. In said process, the matrix and the at least two channels are formed by a single extrusion step.

### BRIEF DESCRIPTION OF THE FIGURES

Additional features and advantages of the invention will appear in the following detailed description of embodiments, based on the appended drawings, wherein:
- FIG. 1A is a perspective view of a monofilament according to a first embodiment;
- FIG. 1B is a cross sectional view of the monofilament of FIG. 1A;
- FIG. 2 is a cross sectional view of a monofilament according to a second embodiment;
- FIG. 3 is a cross sectional view of a monofilament according to a third embodiment;
- FIG. 4A is a perspective view of a monofilament according to a fourth embodiment;
- FIG. 4B is a cross sectional view of the monofilament of FIG. 4A;
- FIG. 5A is a perspective view of a monofilament according to a fifth embodiment;
- FIG. 5B is a cross sectional view of the monofilament of FIG. 5A.

### DETAILED DESCRIPTION OF EMBODIMENTS OF THE INVENTION

Instead of using the conventional structure of bi-material monofilaments, comprising a core and a sheath surrounding the core, coaxial with the core, the present invention provides a monofilament comprising at least two channels embedded in a matrix, wherein the channels are separated from each other by a portion of the matrix.

Preferably, the matrix extends over the whole circumference of the monofilament. The material of the matrix is a first polyamide material, i.e. a material that contains a polyamide or a mixture of polyamides. Polyamides are usually used to form cutting monofilaments due to their high heat resistance and impact resistance.

The material of the channels may also be a polyamide material (second polyamide material), but with a different composition from the material of the matrix.

Alternatively, the material of the channels may be a polyolefin material, such as polyethylene (high density or low density), or polypropylene.

Preferably, the materials of the matrix and the channels are virgin material, i.e. materials that are processed for the first time, and not recycled materials. Indeed, virgin materials have better properties than recycled ones.

By selecting suitable materials for the matrix and the channels, the present invention allows complying with various technical requirements. Indeed, the channels allow modifying the behavior of the monofilament as compared to a single material monofilament, by imparting to the monofilament additional properties due to the material(s) of the channels. Besides, the structure of the monofilament allows distributing the mechanical constraints caused by an impact over the plurality of channels.

Polyamides that may be used to form the matrix and the channels of the monofilament may include: PA6, PA6/66, PA66, PA11, PA12, PA6/10, PA4/6, PA6T, PA6/6T, either as a single material or as a combination of at least two materials. Advantageously, mixtures of such polyamide materials may be used, for the matrix and/or the channels, in order to benefit from the specific properties of each polyamide. Besides, said mixtures allow increasing the number of possible combinations of materials for the monofilament, which provides a great versatility in terms of mechanical and thermal behavior. Typically, up to five different compositions may be used for the matrix and the channels of a monofilament.

In some embodiments, the channels may be formed of PP and/or PE. As compared to polyamide, polyolefins have a smaller density which allows reducing the weight of the monofilament.

The channels may not be all formed of the same material. Indeed, it may be particularly advantageous to use different materials for the channels in order to improve different properties of the monofilament. Examples of advantageous compositions will be provided below.

Additional materials may be used in the matrix and/or the channels.

Such additional materials may include:
- fillers, for example natural fibers, such as flax, hemp, cellulose, or miscanthus, talc, silica, alumina (Al₂O₃), titanium oxide (TiO₂), alone or in combination;
- dyes;
- compatibilization agents, for example ethylene acrylic ester, glycidyl methacrylate (GMA), methyl acrylate, styrene acrylic, 2,3-epoxypropyl methacrylate, maleic anhydride, alone or in combination.

Polyamides usually have close melting temperatures (about 220°C), and are chemically compatible, which allows a good cohesion of portions made of these materials. Thus, delamination of the matrix and the channels which could lead to a splitting of the free end of the monofilament into a plurality of small strands and to a strong reduction of the cutting efficiency, may be avoided.

Besides, the mechanical construction of the monofilament itself increases the cohesion between different materials and reduces the risk of delamination, since the arrangement of the channels within the matrix provides a large surface of contact between the channels and the matrix. For example, if one considers on the one hand a monofilament comprising a core and a sheath surrounding the core, coaxial with the core, and on the other hand a monofilament according to the invention, comprising four channels and a matrix, with the same weight ratio between the channels (or core) and the matrix (or sheath), the surface of contact between the channels (or core) and the matrix (or sheath) is greater in the latter case. Thus, the construction of the monofilament according to the invention promotes cohesion of the matrix and the channels.

If necessary, to minimise delamination, especially if the channels comprise a polyolefin material, at least one compatibilization agent may be added in the monofilament. In some embodiments, such a compatibilization agent may be included in the composition of the matrix and/or the channels. In other embodiments, the compatibilization agent may be added at the interface between the channels and the matrix.

The number, shape and arrangement of the channels within the matrix may be adjusted depending on the selected materials and required performance of the cutting monofilament.

In preferred embodiments, the monofilament has a circular cross section, presenting typically a diameter comprised between 1.6 mm and 4.5 mm. However, other shapes may be chosen, such as square or rectangular shapes.

The channels are preferably arranged according to a regular pattern over the cross section of the monofilament. In particular, the channels may have identical cross sectional shapes and sizes and be arranged at regular intervals relative to the circumference of the monofilament and relative to each other. In other embodiments, the channels may have different cross section shapes and sizes.

The monofilament is made by a coextrusion process, i.e. a process wherein the channels and the matrix are extruded simultaneously from an extrusion head. Since the materials of the channels and the matrix are in a molten state during said extrusion step, a more intimate bonding of the materials at the interfaces between the channels and the matrix may be obtained, possibly enhanced by the use of a compatibilization agent.

The matrix and channels are continuous along a longitudinal axis of the monofilament. In particular, the monofilament has the same structure at any location along the longitudinal axis.

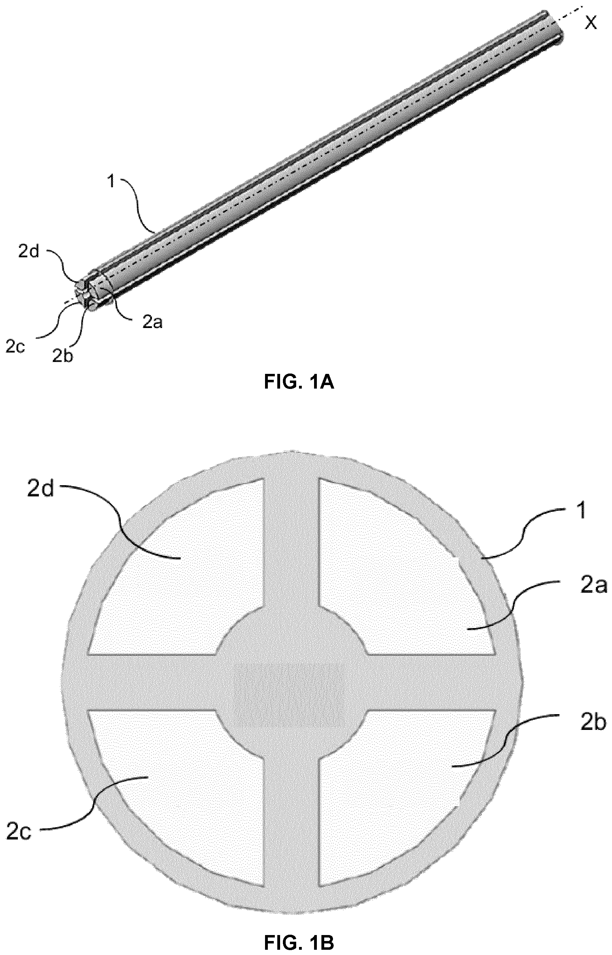

FIGS. 1A and 1B illustrate a first embodiment of the monofilament.

The monofilament has a circular cross section, which is defined by the circumference of the matrix 1.

Four channels 2a-2d are embedded in the matrix 1. All the channels have the same shape, which is defined by two opposite arcuate edges having the same center as the center of the matrix and two opposite straight edges orthogonal to each other.

The channels 2a-2d extend continuously along the longitudinal axis X of the monofilament.

In some embodiments, all the channels 2a-2d are made of the same material.

In other embodiments, at least two channels are made of different materials. In this way, the mechanical behavior of the monofilament may be adjusted by varying the composition of the channels.

The weight ratio between the channels 2a-2d and the matrix 1 is typically comprised between 20/80 and 80/20, preferably between 40/60 and 60/40. For example, each channel may have a weight comprised between 5 and 15% of the weight of the monofilament and the matrix has a weight comprised between 20 and 80% of the weight of the monofilament.

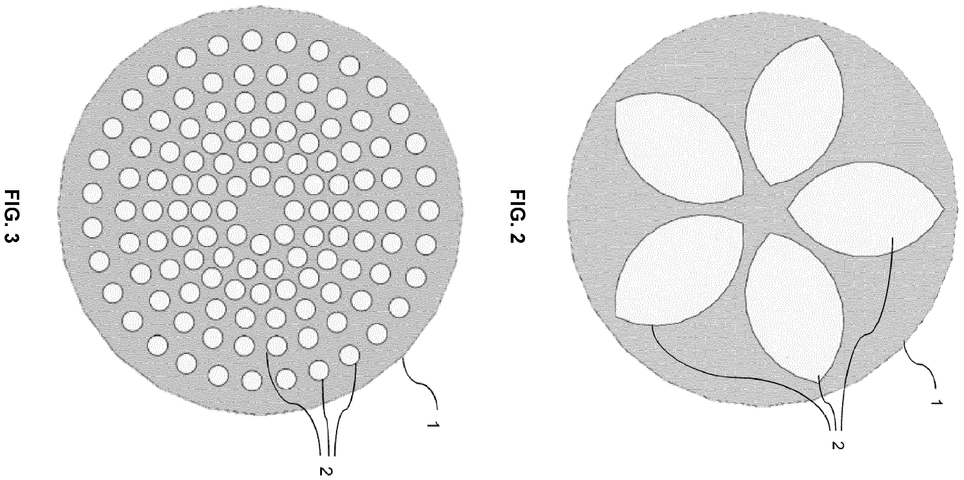

FIG. 2 illustrates a second embodiment of the monofilament.

The monofilament has a circular cross section, which is defined by the circumference of the matrix 1.

Five channels 2 are embedded in the matrix 1. All the channels have the same shape, which is defined by two opposite arcuate edges having an axis of symmetry which extends substantially radially from the center of the matrix.

The channels are regularly arranged around the center of the matrix in the form of petals.

The weight ratio between the channels 2a-2d and the matrix 1 is typically comprised between 20/80 and 80/20, preferably between 40/60 and 60/40. For example, each channel may have a weight of about 10% of the weight of the monofilament and the matrix has a weight of about 50% of the weight of the monofilament.

FIG. 3 illustrates a third embodiment of the monofilament.

The monofilament has a circular cross section, which is defined by the circumference of the matrix 1.

A plurality of channels 2 having a circular cross section are arranged according to concentric circles around the center of the matrix, with identical angular distance between adjacent channels.

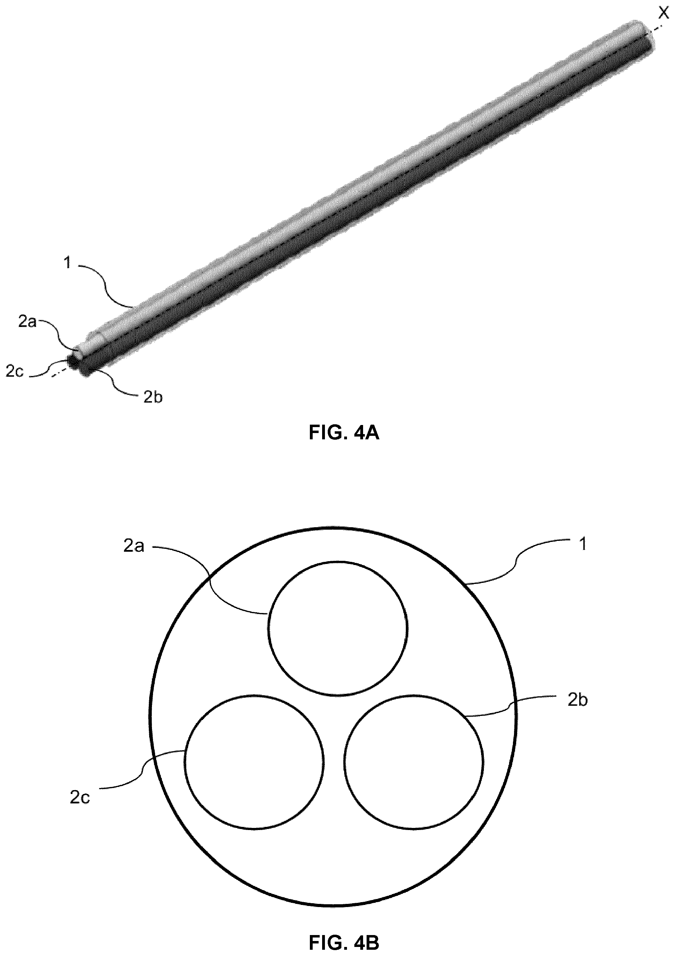

FIGS. 4A and 4B illustrate a fourth embodiment of the monofilament.

The monofilament has a circular cross section, which is defined by the circumference of the matrix 1.

Three channels 2a-2c are embedded in the matrix 1. All the channels have the same circular cross section.

The channels 2a-2c extend continuously along the longitudinal axis X of the monofilament.

In some embodiments, all the channels 2a-2c are made of the same material.

In other embodiments, at least two channels are made of different materials. In this way, the mechanical behavior of the monofilament may be adjusted by varying the composition of the channels.

The weight ratio between the channels 2a-2c and the matrix 1 is typically comprised between 40/60 and 60/40.

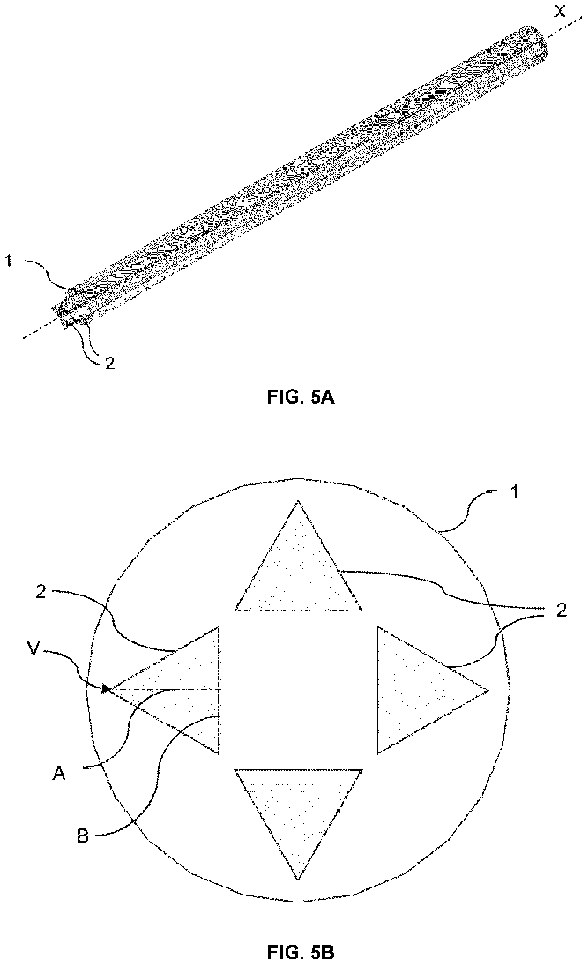

FIGS. 5A and 5B illustrate a fourth embodiment of the monofilament.

The monofilament has a circular cross section, which is defined by the circumference of the matrix 1. However, the monofilament may have any other cross section.

Channels 2 having a triangular cross section are embedded in the matrix. Preferably, the cross section of the channels is shaped as an equilateral or an isosceles triangle.

The channels are arranged such that each triangle has an altitude A, extending between a base B and a vertex V of the triangle, which is oriented radially, and such that said base B is located more inside the monofilament than the vertex V. In the illustrated embodiment, the monofilament comprises four channels 2 arranged at 90° from each other. In this case, the bases B of two opposite triangles perpendicular to said altitude A are parallel to each other, while being perpendicular to the base of the adjacent triangles. However, a different number of triangular channels may be used, e.g. from three to five channels, with the orientation described above.

This specific arrangement of the triangular channels allows further improving impact behavior. Indeed, thanks to this orientation of the channels, the peripheral portion of the monofilament (which is first involved in the absorption of an impact) contains a greater quantity of the first polyamide material than the central portion of the monofilament, and is thus well adapted to resist to an impact. On the other hand, the triangular shape of the channels still allows including a substantial quantity of the polyolefin or second polyamide material within the monofilament.

The channels 2 extend continuously along the longitudinal axis X of the monofilament.

The weight ratio between the channels 2 and the matrix 1 is typically comprised between 20/80 and 80/20, preferably between 40/60 and 60/40.

In some embodiments, all the channels 2 are made of the same material.

In other embodiments, at least two channels are made of different materials. In this way, the mechanical behavior of the monofilament may be adjusted by varying the composition of the channels.

### Examples of compositions

The following examples may be based on any of the arrangements of the channels within the matrix described above.

### Example 1

The matrix may be formed of a mixture of PA6 and PA6/66, whereas some channels may be formed of PA6 and other channels may be formed of copolymer PA6/66. This structure allows increasing the flexibility and improving shock behavior of the monofilament, thanks to the PA6/66 channels that constitute a highly flexible "skeleton" of the monofilament.

### Example 2

The matrix may be formed of a mixture of PA66, PA6/66 and a monomer of PA6, whereas some channels may be formed of PA66 and other channels may be formed of a mixture of PA6 and PA6/66. In this structure, the PA66 improves the thermal behavior of the monofilament while the mixture of PA6 and PA6/66, which is less rigid than PA66, compensates the rigidity of the PA66 channels and provides a good flexibility and good abrasion behavior.

### Example 3

The matrix may be formed of a mixture of PA66, PA6/6T and PA6/66, whereas the channels may be formed of a mixture of PA6 and PA6/66. Thanks to its high melting temperature, PA6/6T increases the thermal resistance of the matrix of the monofilament. In addition, the monofilament is more resistant to heat generated by friction within the cutting head. Although the material of the matrix is very rigid, the channels compensates its rigidity and provide a greater flexibility and ability of the monofilament to absorb shocks. The monofilament also has a lower tendency to break at the eyelet where it exits from the cutting head.

### Example 4

The matrix of the monofilament may be formed of a copolymer PA6/66 whereas the channels may be formed of a mixture of PA6, PA66 and PA6/66. In this embodiment, the channels may be designed to occupy a large part of the monofilament, leaving at the surface of the monofilament a thin layer of the matrix material, which is highly flexible and capable of absorbing shocks.

### Example 5

The matrix of the monofilament may be formed of a mixture of PA6 and PA6/66 whereas at least some of the channels are formed of PP or PE with a compatibilization agent. Thanks to the lower density of the polyolefin material, the weight of the monofilament may be significantly decreased.

Of course, the above examples are provided only to illustrate the variety of embodiments of the invention, and are not intended to limit the scope of the present invention.

## Claims

1. Monofilament for cutting vegetation, comprising:
- a matrix (1) made of a first polyamide material and
- at least two channels (2, 2a-2d) separately embedded in the matrix (1), the at least two channels being made of a polyolefin material or a second polyamide material different from the first polyamide material.

2. Monofilament according to claim 1, wherein the matrix extends over the whole circumference of the monofilament.

3. Monofilament according to claim 1 or claim 2, wherein the matrix and the at least two channels extend continuously along a longitudinal axis (X) of the monofilament.

4. Monofilament according to claim 3, wherein the at least two channels are linear and parallel to the longitudinal axis (X).

5. Monofilament according to any one of claims 1 to 4, wherein the at least two channels are arranged according to a regular pattern over the cross section of the monofilament.

6. Monofilament according to any one of claims 1 to 5, wherein the at least two channels present a triangular cross section, an altitude (A) of each triangle being oriented radially between a base (B) and a vertex (V) of the triangle and said base (B) being located more inside the monofilament than said vertex (V).

7. Monofilament according to any one of claims 1 to 6, wherein the volume of the channels is comprised between 10% and 80% of the volume of the monofilament.

8. Monofilament according to any one of claims 1 to 7, wherein the first and/or second material comprises at least one of: polyamide 6, polyamide 6-6, copolyamide 6/66, polyamide 4-6, polyamide 6-10, polyamide 11, polyamide 12, polyamide 6T and polyamide 6/6T.

9. Monofilament according to any one of claims 1 to 8, wherein the first and/or second material comprises a filler made of at least one of: natural fibers, such as flax, hemp, cellulose, or miscanthus, talc, silica, alumina (Al₂O₃), and titanium oxide (TiO₂).

10. Monofilament according to any one of claims 1 to 9, wherein the weight of the channels is comprised between 20 and 80% of the weight of the monofilament.

11. Monofilament according to any one of claims 1 to 10, wherein the monofilament is obtained by a single extrusion step.

12. Monofilament according to any one of claims 1 to 11, wherein the first and second materials are coextruded.

13. Monofilament according to any one of claims 1 to 12, presenting a diameter comprised between 1.6 mm and 4.5 mm.

14. Process for manufacturing a monofilament according to any one of claims 1 to 13, wherein the matrix and the at least two channels are formed by a single extrusion step.
